(19) **Europäisches Patentamt** / **European Patent Office** / **Office européen des brevets**

(11) **EP 4 113 686 A1**

(12) **EUROPEAN PATENT APPLICATION**
published in accordance with Art. 153(4) EPC

(43) Date of publication:
**04.01.2023 Bulletin 2023/01**

(21) Application number: **22745145.7**

(22) Date of filing: **21.01.2022**

(51) International Patent Classification (IPC):
**H01M 10/0525** (2010.01)     **H01M 10/0567** (2010.01)

(52) Cooperative Patent Classification (CPC):
**H01M 4/13; H01M 10/0525; H01M 10/0567; H01M 10/058**

(86) International application number:
**PCT/CN2022/073161**

(87) International publication number:
**WO 2022/161270 (04.08.2022 Gazette 2022/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.02.2021 CN 202110138000**

(71) Applicant: **Contemporary Amperex Technology Co., Limited**
**Jiaocheng District**
**Ningde City**
**Fujian 352100 (CN)**

(72) Inventors:
- ZOU, Hailin
  **Ningde City, Fujian 352100 (CN)**
- CHEN, Peipei
  **Ningde City, Fujian 352100 (CN)**
- PENG, Chang
  **Ningde City, Fujian 352100 (CN)**
- LIANG, Chengdu
  **Ningde City, Fujian 352100 (CN)**

(74) Representative: **Ziebig Hengelhaupt Intellectual Property Attorneys**
**Patentanwaltsanwaltskanzlei PartGmbB**
**Leipziger Straße 49**
**10117 Berlin (DE)**

(54) **LITHIUM ION BATTERY, BATTERY MODULE, BATTERY PACK AND ELECTRICITY UTILIZATION APPARATUS**

(57)     The present application provides a lithium ion battery, comprising an electrode assembly and an electrolyte comprising a fluorosulfonate and/or difluorophosphate substance. The lithium ion battery has a gas generation area coefficient during formation, defined as $\alpha$, with $\alpha = M \times S/200$; wherein M is the loading of the negative electrode material per area of the negative electrode current collector and is in the range of 5 mg/cm$^2$ - 100 mg/cm$^2$; S is the specific surface area of the negative electrode material on the negative electrode current collector and is in the range of 0.1 m$^2$/g - 10 m$^2$/g; the lithium ion battery has a gas venting path coefficient defined as $\beta$, with $\beta = 100/L$, wherein L is the width of the area coated with the negative electrode material on the surface of the negative electrode current collector, and L is in the range of L $\geq$ 50 mm; the mass percentage content w% of the fluorosulfonate and/or difluorophosphate substance in the electrolyte and $\alpha$ and $\beta$ meet the equation $0.01 \leq w \times \beta/\alpha \leq 20$. The lithium ion battery of the present application can have both high energy density and low gas generation during formation.

EP 4 113 686 A1

**Description**

**Technical Field**

The present application relates to a lithium ion battery, particularly a lithium ion battery with high energy density and low gas generation, and a preparation method therefor, a battery module, a battery pack and a power consuming device.

**Background Art**

With the rapid development in the new energy field, lithium ion batteries, due to their advantages of good electrochemical performance, no memory effect and little environmental pollution, are widely applied in various large power devices, energy storage systems and various consumable products, especially in the field of new energy vehicles such as pure electric vehicles and hybrid electric vehicles.

In the field of new energy vehicles, a higher requirement for the service life of lithium ion batteries are put forward by consumers.

Since current lithium ion batteries can hardly meet the higher requirement for battery service life, the development of lithium ion batteries with a higher energy density has become one of the major topics in the research and development of lithium ion batteries.

However, in the formation process of a battery with a high energy density, when a stable SEI film is formed on the negative electrode, the solvent and some additives in the electrolyte are reduced or decomposed, which leads to intensified gas generation inside the battery; furthermore, compared with a battery with a low energy density, the gas generation problem in the battery with a high energy density is more serious. If the gases generated during formation, for example, methane, ethane, ethylene, carbon monoxide, etc., fail to be vented in a timely manner, bubbles would be formed between the positive and negative electrodes, which affects the intercalation and de-intercalation of lithium ions in the positive and negative electrodes, thus resulting in problems of increase in the internal resistance of the battery, black spots and local lithium precipitation on the negative electrode interface, and abnormal utilization of the capacity, and finally affecting the electrical characteristics and safety performance of the battery.

Therefore, there is an urgent need to develop a lithium ion battery with high energy density and low gas generation during formation.

**Summary of the Invention**

The present application has been made in view of the above issues, and is based on an object of providing a lithium ion battery with high energy density and low gas generation, a battery module, a battery pack and a power consuming device. The lithium ion battery of the present application can not only have an improved energy density, but also have significantly reduced gas generation during formation and phenomena of black spots and precipitation of lithium, which facilitates improvement of the electrochemical performance and the safety performance of the lithium ion battery.

An object of the present application is to provide a lithium ion battery with a high energy density.

An object of the present application is to provide a high energy density lithium ion battery with low gas generation during formation.

An object of the present application is to provide a lithium ion battery with the phenomena of black spots and lithium precipitation on the negative electrode being significantly mitigated.

An object of the present application is to provide a high energy density lithium ion battery with a low internal resistance.

An object of the present application is to provide a high energy density lithium ion battery with improved cycling performance.

The inventors have found that one or more of the preceding objects can be achieved by using the technical solutions of the present application.

The present application provides a lithium ion battery, comprising:

an electrode assembly, wherein the electrode assembly comprises a negative electrode current collector and a negative electrode material provided on at least one surface of the negative electrode current collector; and

an electrolyte, comprising a fluorosulfonate and/or difluorophosphate substance;

wherein the lithium ion battery has a gas generation area coefficient during formation defined as $\alpha$, with $\alpha = M \times S/200$, equation (I),

in the equation (I), M is the loading of the negative electrode material per unit area of the negative electrode current

collector, in mg/cm$^2$, and M is in the range of 5 mg/cm$^2$ - 100 mg/cm$^2$,

in the equation (I), S is the specific surface area of the negative electrode material on the negative electrode current collector, in m$^2$/g, and S is in the range of 0.1 m$^2$/g - 10 m$^2$/g, and the lithium ion battery has a gas venting path coefficient defined as $\beta$, with $\beta$ = 100/L, equation (II),

in equation (II), L is the width of the area coated with the negative electrode material on the surface of the negative electrode current collector, in mm, and L is in the range of L $\geq$ 50 mm;

wherein the mass percentage content w% of the fluorosulfonate and/or difluorophosphate substance in the electrolyte, the gas generation area coefficient during formation $\alpha$ of the lithium ion battery, and the gas venting path coefficient $\beta$ of the lithium ion battery satisfy 0.01 $\leq$ w $\times$ $\beta$/$\alpha$ $\leq$ 20, formula (III).

Through a lot of researches and experiments, the inventors of the application have found that when the mass percentage content w% of fluorosulfonate and/or difluorophosphate in the electrolyte, the gas generation area coefficient of $\alpha$, and the gas venting path coefficient of $\beta$ satisfy the relationship formula of 0.01 $\leq$ w $\times$ $\beta$/$\alpha$ $\leq$ 20, the lithium ion battery would have an improved energy density and have very low gas generation during formation, which can effectively prevent the phenomena of black spots and lithium precipitation occurred at the negative electrode during formation, thereby facilitating the mitigation of the internal resistance and improvement of the electrical characteristics in the battery.

In the present application, in view of the structure of a lithium ion battery and by jointly adjusting and controlling the various structural parameters of the battery and the types and contents of additives in the electrolyte and combining the cooperative effect of the parameters of various internal structures of the battery and the parameters of the electrolyte, a lithium ion battery with a high energy density is obtained, and at the same time the problems of severe gas generation during formation and the black spots and lithium precipitation on the negative electrode of the lithium ion battery with a high energy density are solved, and the lithium ion battery is significantly improved in terms of the internal resistance and the electrical performance.

In any embodiment, optionally, the fluorosulfonate has a structural formula of $(FSO_3)_yM^{y+}$, wherein $M^{y+}$ is selected from one of $Li^+$, $Na^+$, $K^+$, $Rb^+$, $Cs^+$, $Mg^{2+}$, $Ca^{2+}$, $Ba^{2+}$, $Al^{3+}$, $Fe^{2+}$, $Fe^{3+}$, $Ni^{2+}$ and $Ni^{3+}$.

In any embodiment, optionally, the difluorophosphate has a structural formula of $(F_2PO_2)_yM^{y+}$, wherein $M^{y+}$ is selected from one of $Li^+$, $Na^+$, $K^+$, $Rb^+$, $Cs^+$, $Mg^{2+}$, $Ca^{2+}$, $Ba^{2+}$, $Al^{3+}$, $Fe^{2+}$, $Fe^{3+}$, $Ni^{2+}$ and $Ni^{3+}$.

In any embodiment, optionally, the mass percentage content w% of the fluorosulfonate and/or difluorophosphate substance in the electrolyte is in the range of 0.01% - 11%, optionally, 0.5% - 10%, and further optionally, 0.5% - 5%.

In the design process of the high energy density lithium ion battery of the application, to the electrolyte, an appropriate amount (0.01% - 11%) of a fluorosulfonate and/or difluorophosphate substance is added, which can significantly reduce the gas generation during formation. When the amount of the fluorosulfonate and/or difluorophosphate substance that is added is set in an appropriate range, on the hand, the black spots occurring on the negative electrode is avoided, and on the other hand, the increase in the viscosity of the electrolyte can be avoid, which otherwise will affect the conductivity of the electrolyte and result in the increase in the internal resistance of the battery.

Optionally, the mass percentage content w% of the fluorosulfonate and/or difluorophosphate substance in the electrolyte may be 0.5% - 10%.

Optionally, the mass percentage content w% of the fluorosulfonate and/or difluorophosphate substance in the electrolyte may be 0.5 - 5%.

Specifically, when the mass percentage content w% of the fluorosulfonate and/or difluorophosphate substance in the electrolyte is in the range of 0.5% - 10%, there is no black spot on the negative electrode, the lithium ion battery also is improved in terms of gas generation during formation of, and the volumetric energy density and internal resistance of the battery are also at a superior level.

Further, when the mass percentage content w% of the fluorosulfonate and/or difluorophosphate substance in the electrolyte is in the range of 0.5% - 5%, the corresponding lithium ion batteries also have both good high temperature cycling properties and normal temperature cycling properties.

In any embodiment, optionally, the loading M of the negative electrode material per unit area of the negative electrode current collector is in the range of 11 mg/cm$^2$ - 80 mg/cm$^2$, optionally, 11 mg/cm$^2$ - 50 mg/cm$^2$.

A relatively low loading M (M is below 11 mg/cm$^2$) of the negative electrode material per unit area of the negative electrode current collector will bring a negative effect on the volumetric energy density of the lithium ion battery. The loading in a suitable range can avoid the increase in the contact area between the negative electrode material and the electrolyte, thus preventing the intensifying of the gas generation during formation and the increase of the internal resistance of the battery.

In any embodiment, optionally, the specific surface area S of the negative electrode material on the negative electrode current collector is in the range of 0.5 m$^2$/g - 5 m$^2$/g.

When the specific surface area S of the negative electrode material is in a suitable range, on the one hand, the reaction kinetics at the phase interface of the electrolyte and the negative electrode material can be improved, which will reduce the electrical resistance of the interface reaction and improve the energy density of the battery; on the other end, the gas generation during formation can be reduced and the black spots occurring on the negative electrode can be avoided.

In any embodiment, optionally, the width L of the area coated with the negative electrode material on the surface of the negative electrode current collector is in the range of 50 mm ≤ L ≤ 200 mm, optionally, 50 mm ≤ L ≤ 100 mm.

When the width L of the area coated with the negative electrode material is in a suitable range, on the one hand, the diffusion path of the gas generated in the formation process can be avoided from becoming longer, such that the gas venting speed is not affected and the occurrence of black spots and a certain influence thereof on the internal resistance of the battery are avoided; on the other hand, the influence on the energy density of a lithium ion battery can be reduced.

In any embodiment, optionally, the electrolyte comprises fluoroethylene carbonate and/or 1,3-propane sultone.

A lot of experiments and researches show that, when an additional fluoroethylene carbonate (FEC) and/or 1,3-propane sultone (PS) is added into the electrolyte comprising fluorosulfonate and/or difluorophosphate, the high- and low-temperature cycling performance of the lithium ion battery can be significantly improved while ensuring the high energy density and low gas generation during formation of the lithium ion battery.

In any embodiment, optionally the negative electrode material has a porosity of 10% - 40%.

The researches show that, the larger the porosity of the negative electrode material is, the more and more unobstructed the paths through which the gas generated during formation is diffused from the inside of the negative electrode material to the interface between the negative electrode and the separator. However, when the porosity of the negative electrode material is more than 50%, the volumetric energy density of the lithium ion battery will be reduced. When the porosity of the negative electrode material is below 10%, the resistance to the intercalation/de-intercalation of lithium ions in the negative electrode material is relatively large, thereby affecting the internal resistance of the battery to an extent. When the porosity of the negative electrode material is defined in 10% - 40%, not only the gas generated inside of the negative electrode material can diffuse out quickly but also the battery is ensured to have a high volumetric energy density and a low internal resistance.

In a second aspect, the present application provides a battery module, comprising a lithium ion battery of the first aspect of the application.

In a third aspect, the present application provides a battery pack, comprising a lithium ion battery of the first aspect of the application or a battery module of the second aspect of the application.

In a fourth aspect, the present application provides a power consuming device, comprising at least one of a lithium ion battery of the first aspect of the application, a battery module of the second aspect of the application, or a battery pack of the third aspect of the application.

**Brief Description of the Drawings**

Fig. 1 is a schematic diagram of a lithium ion battery of an embodiment of the application.
Fig. 2 is an exploded view of the lithium ion battery shown in Fig. 1 in an embodiment of the application.
Fig. 3 is a schematic diagram of a battery module of an embodiment of the application.
Fig. 4 is a schematic diagram of a battery pack of an embodiment of the application.
Fig. 5 is a exploded view of the battery pack shown in Fig. 4 in an embodiment of the application.
Fig. 6 is a schematic diagram of a power consuming device of an embodiment of the application.

List of reference numerals:

1 - Battery pack
2 - Upper box body
3 - Lower box body
4 - Battery module
5 - Lithium ion battery
51 - Housing
52 - Electrode assembly
53 - Top cover assembly

**Detailed Description of Embodiments**

Hereinafter, the lithium ion battery with high energy density and low gas generation, a battery module, a battery pack, and a power consuming device of the present application will be specifically disclosed with reference to detailed description of the accompanying drawings. However, unnecessary detailed illustrations may be omitted in some instances. For example, there are situations where detailed description of well known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in claims.

For the sake of brevity, some numerical ranges are explicitly disclosed herein. However, any lower limit may be combined with any upper limit to form a range that is not explicitly described; and any lower limit may be combined with any other lower limit to form a range that is not explicitly described, and any upper limit may be combined with any other upper limit to form a range that is not explicitly described. Further, each individually disclosed point or single value may be a lower or upper limit and combined with any other point or single value or combined with other lower or upper limits to form a range that is not explicitly described.

In the conventional strategies for reducing the gas generation during formation of a lithium ion battery, a common solution is to reduce the gas generation rate by reducing the current during formation and to speed up the gas venting by evacuation to a negative pressure, so as to ensure that the gas inside the battery is discharged in time. However, by in-depth researches by the inventors of the present application, as the energy density of the battery is designed to be improved, particularly for wound batteries, the formation gases may not be vented timely according to this conventional method, thus deteriorating the formation interface.

Another solution to reduce the gas generation is to use a formation method by small-current staged pressurization. However, this method is of cumbersome procedures and time-consuming and has poor operational stability, which is not conducive to large-scale industrial applications.

Thus it can be seen that, in order to mitigate the problem of gas generation in the formation of lithium ion batteries, only regulating certain process methods or operation steps in the formation process of batteries cannot meet the actual requirements. Therefore, to find a long-term and effective method to mitigate the gas generation problem of lithium ion batteries, the most feasible method is, in view of the structure of the lithium ion batteries per se, to develop and design a lithium ion battery with low gas generation during formation by jointly adjusting and controlling the various structural parameters of the battery and the types and contents of additives in the electrolyte.

A lot of researches and experiments by the inventors show, from a perspective of developing and designing a high energy density and low formation gas generation, the present application in view of the structure of the lithium ion battery per se, a high energy density lithium ion battery with low gas generation during formation is developed and designed by comprehensively adjusting and controlling the structural parameters of the electrode assembly and the type and content of the electrolyte, and specifically, by jointly adjusting and controlling of the loading of the active material per unit area of the current collector, the specific surface area of the active material loaded on the current collector, the width of the area coated with the active material, and the addition of a fluorosulfonate and/or difluorophosphate substance into the electrolyte and combining the cooperative effects of the various parameters.

Furthermore, a lot of researches and experiments by the inventors show that, when a certain relationship between the content of the fluorosulfonate and/or difluorophosphate substance and the loading of the active material per unit area of the current collector, the specific surface area of the active material loaded on the current collector and the width of the area coated with the active material is satisfied, the lithium ion battery meeting this relationship not only can have a significantly improved high energy density but can have the reduced gas generation during formation.

The theoretical relationship formula proposed in the present application is not merely limited to be applicable to a battery structure; when the shape of the battery, the winding method of the bare cell or the laminating method of the bare cell are changed due to other requirements, the theoretical relationship formula is also applicable.

[Lithium ion battery]

Generally, a lithium ion battery comprises a positive electrode plate, a negative electrode plate, an electrolyte and a separator. In the charge/discharge process of the battery, active ions move back and forth and intercalated and de-intercalated between the positive electrode plate and the negative electrode plate. The electrolyte is located between the positive electrode plate and the negative electrode plate and functions for conducting ions. The separator is provided between the positive electrode plate and the negative electrode plate, and mainly prevents the positive and negative electrodes from short-circuiting and enables ions to pass through.

The present application provides a lithium ion battery, comprising:

an electrode assembly, wherein the electrode assembly comprises a negative electrode current collector and a negative electrode material provided on at least one surface of the negative electrode current collector; and

an electrolyte, comprising a fluorosulfonate and/or difluorophosphate substance;

wherein the lithium ion battery has a gas generation area coefficient during formation defined as $\alpha$, with $\alpha = M \times S/200$, equation (I),

in the equation (I), M is the loading of the negative electrode material per unit area of the negative electrode current collector, in $mg/cm^2$, and M is in the range of 5 $mg/cm^2$ - 100 $mg/cm^2$,

in the equation (I), S is the specific surface area of the negative electrode material on the negative electrode current collector, in $m^2/g$, and S is in the range of 0.1 $m^2/g$ - 10 $m^2/g$, and the lithium ion battery has a gas venting path coefficient defined as $\beta$, with $\beta = 100/L$, equation (II),

in equation (II), L is the width of the area coated with the negative electrode material on the surface of the negative electrode current collector, in mm, and L is in the range of $L \geq 50$ mm;

wherein the mass percentage content w% of the fluorosulfonate and/or difluorophosphate substance in the electrolyte, the gas generation area coefficient during formation $\alpha$ of the lithium ion battery, and the gas venting path coefficient $\beta$ of the lithium ion battery satisfy $0.01 \leq w \times \beta/\alpha \leq 20$, formula (III).

A lot of researches and experiments by the inventors show that, in order to design and develop a lithium ion battery with both a high energy density and low gas generation during formation, it is required to comprehensively adjust and control the battery and the various parameters related to the improvement of energy density of a battery, related to the decrease of gas generation during formation, and related to both the improvement of energy density of a battery and the decrease of the gas formation generation, rather than only adjusting and controlling a parameter alone.

Specifically, the gas generated during formation is mainly generated during the process of reduction and decompose of an organic constituent (for example, an organic solvent or an organic additive) on the surface of the negative electrode material in the electrolyte, to form an interface protection film. The increase in the loading M of the negative electrode material per unit area of the current collector can, on the one hand, significantly improve the volumetric energy density of a battery, but on the other hand, would correspondingly increase the contact area of the negative electrode material and the electrolyte, which in turn results in the reduction and decomposition of more electrolyte so as to generate more gases.

By the same reasoning, on the one hand, selecting a negative electrode material with a relatively larger specific surface area S can increase the contact area of the negative electrode material and the electrolyte and reduce the transmission resistance of lithium ions at the phase interface, so as to improve the energy density of a battery, but on the other hand, the increase in the contact area of the negative electrode material and the electrolyte would reduced and decomposed more electrolyte, to generate more gases.

It can be seen therefrom that, with the proviso that the lithium ion battery is ensured to have a high energy density (with M in the range of 5 $mg/cm^2$ - 100 $mg/cm^2$ and S in the range of 0.1 $m^2/g$ - 10 $m^2/g$), in view of the gas generation during formation, both the specific surface area S of the negative electrode material and the loading M of the negative electrode material per unit area of the current collector would affect the gas generation during formation by influencing the contact area of the electrolyte and the negative electrode material, and therefore, the present application defines a gas generation area coefficient during formation of $\alpha$ related to M and S, and the gas generation area coefficient during formation of $\alpha$ can be used to overall characterize the relationship between the contact area of the electrode solution and the negative electrode material and the gas generation during formation. A lot of researches and experiments by the inventors show that, M, S and $\alpha$ satisfy the relationship equation of $\alpha = M \times S/200$.

On the one hand, in view of the venting of gases inside the battery, during the development and design of the lithium ion battery of the application, when the width L of the area coated with the negative electrode material on the surface of the negative electrode current collector is designed to be relatively large, it is beneficial for improving the volumetric energy density of the battery, but on the other hand, it would correspondingly increase the length of the path through which gases inside the battery is vented. In the actual design of a bare cell, the L is required to be designed as long as possible so as to further increase the volumetric energy density, but too long L is not conducive to the rapid venting of gases generated during formation.

It can be seen therefrom that, with the proviso that the designed lithium ion battery has a high energy density (with L in the range of $L \geq 50$ mm), in view of the timely venting of the gases during formation, the width L of the area coated with the negative electrode material affects the gas generation during formation by means of the influence thereof on the length of the gas diffusion path, and therefore, in the present application, a gas venting path coefficient $\beta$ related to L is defined, and the value of $\beta$ can indicate the degree of difficulty in venting the gas generated in the formation process. A lot of researches and experiments by the inventors show that, L and $\beta$ satisfy the relationship equation of $\beta = 100/L$.

In another aspect, in view of reducing the amount of gases generated during formation, improving the formulation of the electrolyte is a more effective way to mitigate the gas generation during formation. The electrolyte commonly used in a lithium ion battery generally comprises an organic solvent and an organic additive, and during formation, these organic constituents are preferentially reduced on the surface of the negative electrode to form a negative interface protection film, and at the same time results in a gas product. On this basis, the present application improves the formulation of the electrolyte by replacing some conventional organic additives with a fluorosulfonate or difluorophosphate inorganic additive, and these inorganic additives precede over organic solvents to be reduced on the surface of the negative electrode and can be directly reduced on the surface of the negative electrode active material such as graphite to form an inorganic coating layer; therefore, no gas product is formed and there is no problem of gas generation from the decomposition of additives either.

Further, since the inorganic additive of the electrolyte has been preferentially reduced on the surface of the negative electrode active material to form an inorganic coating layer, the reduction and decomposition of the electrolyte solvent on the surface of the negative electrode can be effectively inhibited, and thus the gas generation from the reduction and decomposition of the electrolyte solvent is further reduced.

It can be seen therefrom that, with the proviso that the lithium ion battery has a high energy density (with M in the range of 5 mg/cm$^2$ - 100 mg/cm$^2$, S in the range of 0.1 m$^2$/g - 10 m$^2$/g, and L in the range of L $\geq$ 50 mm), in view of the gas generation during formation, improving the formulation of the electrolyte is a way that can essentially reduce the gas generation throughout the battery design and development process.

However, a lot of researches and experiments by the inventors show that, the addition of an excessive inorganic salt additive into the electrolyte will increase the viscosity of the electrolyte, deteriorate the conductivity of the electrolyte, and hinder the mobility rate of lithium ions in the electrolyte to an extent, thus resulting in the increase of the internal resistance of the battery.

From the preceding discussions from three aspects, it can be seen that the development and design of a lithium ion battery with both a high energy density and low gas generation during formation is a result of the combined effects of various parameters, and as the value of a related parameter changes, only correspondingly changing the values of other related parameters can ensure that the volumetric energy density and the formation gas generation of a battery are maintained in their respective optimal ranges at the same time.

With various parameters related to improving high energy density of a battery, related to reducing the gas generation during formation and related to both the improvement of high energy density of a battery and the reduction of the formation gas generation being taken into consideration in a comprehensive manner, the inventors, after a lot of researches and experiments, have found that when the mass percentage content w% of the fluorosulfonate and/or difluorophosphate in the electrolyte, the gas generation area coefficient during formation of $\alpha$, and the gas venting path coefficient of $\beta$ satisfy the relationship formula of $0.01 \leq w \times \beta/\alpha \leq 20$, the resulting lithium ion battery would have a significantly improved energy density and very low gas generation during formation, which can effectively prevent the phenomena of black spots and lithium precipitation on the negative electrode and is beneficial to the improvement of the internal resistance of a battery and for improving the electrical characteristics of a battery.

Optionally, the value of w $\times$ $\beta/\alpha$ may be 19.14, 3.83, 0.64, 0.38, 0.19, 1.74, 0.96, 0.24, 0.83, 1.10, 1.65, 3.31, 0.02, 0.87, 1.74, 3.48, 8.70, 17.40, or 19.14, or a range with the numerical values thereof obtained by combining any two of the above numerical values.

In the present application, in view of the structure of a lithium ion battery and by jointly adjusting and controlling the various structural parameters of the electrode assembly and the types and contents of additives in the electrolyte and combining the cooperative effect of the parameters of various internal structures of the battery and the parameters of the electrolyte, a lithium ion battery with a high energy density is developed and designed, and at the same time the problems of intensified gas generation during formation and the black spots and lithium precipitation on the negative electrode of the lithium ion battery with a high energy density are solved, and the lithium ion battery is significantly improved in terms of the internal resistance and the electrical performance.

[Electrolyte solution]

The electrolyte is located between the positive electrode plate and the negative electrode plate and functions for conducting ions. The electrolyte of the present application comprises a fluorosulfonate and/or difluorophosphate substance.

In some embodiments, optionally, the fluorosulfonate has a structural formula of $(FSO_3)_y M^{y+}$, wherein $M^{y+}$ is selected from one of $Li^+$, $Na^+$, $K^+$, $Rb^+$, $Cs^+$, $Mg^{2+}$, $Ca^{2+}$, $Ba^{2+}$, $Al^{3+}$, $Fe^{2+}$, $Fe^{3+}$, $Ni^{2+}$ and $Ni^{3+}$.

In some embodiments, optionally, the difluorophosphate has a structural formula of $(F_2PO_2)_y M^{y+}$, wherein $M^{y+}$ is selected from one of $Li^+$, $Na^+$, $K^+$, $Rb^+$, $Cs^+$, $Mg^{2+}$, $Ca^{2+}$, $Ba^{2+}$, $Al^{3+}$, $Fe^{2+}$, $Fe^{3+}$, $Ni^{2+}$ and $Ni^{3+}$.

In some embodiments, optionally, the mass percentage content w% of the fluorosulfonate and/or difluorophosphate substance in the electrolyte is in the range of 0.01% - 11%, optionally, 0.5% - 10%, and further optionally, 0.5% - 5%.

In the design process of the high energy density lithium ion battery of the application, to the electrolyte, an appropriate amount (0.01% - 11%) of a fluorosulfonate and/or difluorophosphate substance is added, which can significantly reduce the gas generation during formation. When the amount of the fluorosulfonate and/or difluorophosphate substance that is added is in a suitable range, on the one hand, black spots and lithium precipitation occurring on the negative electrode are avoided, and on the other hand, the deterioration of the conductivity of the electrolyte due to the increase of the viscosity of the electrolyte can be avoided, and the increase of the internal resistance of a battery due to the decrease of the mobility rate of lithium ions in the electrolyte can be avoided to an extent.

Optionally, the mass percentage content w% of the fluorosulfonate and/or difluorophosphate substance in the electrolyte may be 0.5% - 10%.

Optionally, the mass percentage content w% of the fluorosulfonate and/or difluorophosphate substance in the electrolyte may be 0.5 - 5%.

Specifically, when the mass percentage content w% of the fluorosulfonate and/or difluorophosphate substance in the electrolyte is in the range of 0.5% - 10%, there is no black spot on the negative electrode, the lithium ion battery also is improved in terms of gas generation during formation of, and the volumetric energy density and internal resistance of the battery are also at a superior level.

Further, when the mass percentage content w% of the fluorosulfonate and/or difluorophosphate substance in the electrolyte is in the range of 0.5% - 5%, the corresponding lithium ion batteries also have both good high- and low-temperature cycling performance.

Optionally, the value of w% may be 0.01%, 0.1%, 0.5%, 1%, 2%, 5%, 10%, or 11%, or a range with the numerical values thereof obtained by combining any two of the above numerical values.

In some embodiments, the solvent can be selected from more than one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate ( EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS) and diethyl sulfone (ESE).

In some embodiments, the electrolyte comprising fluorosulfonate and/or difluorophosphate also optionally comprises an additive. For example, the additive can include a negative electrode film-forming additive, or a positive electrode film-forming additive, and further an additive that can improve certain properties of a battery, for example, an additive to improve the overcharge performance of a battery, an additive to improve the high-temperature performance of a battery, and an additive to improve the low-temperature performance of the battery, etc., for example, it can be fluoroethylene carbonate (FEC), 1,3-propane sultone (PS), etc.

A lot of experiments and researches show that, when an additional fluoroethylene carbonate (FEC) and/or 1,3-propane sultone (PS) is added into the electrolyte comprising fluorosulfonate and/or difluorophosphate, the high- and low-temperature cycling performance of the lithium ion battery can be significantly improved while ensuring the high energy density and low gas generation during formation of the lithium ion battery.

In some embodiments, the electrolyte also optionally comprises a lithium salt, and the lithium salt is selected from one or more of $LiN(C_xF_{2x+1}SO_2)(C_yF_{2y+1}SO_2)$, $LiPF_6$, $LiBF_4$, $LiBOB$, $LiAsF_6$, $Li(FSO_2)_2N$, $LiCF_3SO_3$ and $LiClO_4$, wherein x and y are natural numbers.

[Negative electrode plate]

The negative electrode plate can comprise a negative electrode current collector and a negative electrode material provided on at least one surface of the negative electrode current collector. The negative electrode material include a negative electrode active material, and examples of the negative electrode active material include synthetic graphite, natural graphite, soft carbon, hard carbon, a silicon-based material, a tin-based material and lithium titanate, etc. The silicon-based material may be selected from more than one of elemental silicon, silicon oxides, silicon carbon composites, silicon nitrogen composites and silicon alloys. The tin-based material may be selected from more than one of elemental tin, tin oxides, and tin alloys.

In some embodiments, optionally, the loading M of the negative electrode material per unit area of the negative electrode current collector is in the range of 11 mg/cm$^2$ - 80 mg/cm$^2$, optionally, 11 mg/cm$^2$ - 50 mg/cm$^2$.

In the present application, the loading M of the negative electrode material per unit area of the negative electrode current collector is changed by means well known to those skilled in the art, for example, by changing the number of the coating in the slurry coating process.

A relatively low loading M (M is below 11 mg/cm$^2$) of the negative electrode material per unit area of the negative electrode current collector will bring a negative effect on the volumetric energy density of the lithium ion battery. When the loading is continued to increase from 50 mg/cm$^2$, on the one hand, the improvement of the volumetric energy density of the battery is not significant, and on the other hand, a too much loading also leads to the increase of the contact area of the negative electrode material and the electrolyte, which will increase the gas generation during formation and increase the internal resistance of the battery.

In some embodiments, optionally, the specific surface area S of the negative electrode material per unit of the negative electrode current collector is in the range of 0.5 $m^2$/g - 5 $m^2$/g.

In the present application, the specific surface area S is changed by means well known to those skilled in the art, for example, by adding different contents of synthetic graphite having a different specific surface area S into the slurry.

When the specific surface area S of the negative electrode material is in a suitable range, on the one hand, the reaction kinetics at the phase interface of the electrolyte and the negative electrode material can be improved, which will reduce the internal resistance of a battery, and on the other hand, the gas generation during formation can be reduced to avoid black spots occurring on the negative electrode.

Optionally, the value of S may be 0.1, 0.5, 1.1, 3, 5, or 10, or a range with the numerical values thereof obtained by combining any two of the above numerical values.

As an example, the negative electrode current collector has two opposite surfaces in its own thickness direction, and the negative electrode material is provided on either or both of the two opposite surfaces of the negative electrode current collector.

In some embodiments, the width L of the area coated with the negative electrode material on the surface of the negative electrode current collector is in the range of 50 mm ≤ L ≤ 200 mm, optionally, 50 mm ≤ L ≤ 100 mm.

In the present application, the width L of the area coated with the negative electrode material is changed by means well known to those skilled in the art, for example, it can be adjusted and controlled by changing the slitting process.

When the width L of the area coated with the negative electrode material is in a suitable range, on the one hand, the diffusion path of the gas generated in the formation process can be prevented from becoming longer, such that the gas venting speed is not affected and thus the occurrence of black spots and the influence on the internal resistance of the battery can be avoided; on the other hand, the influence on the energy density of a lithium ion battery can be reduced.

Optionally, the value of L may be 200, 150, 100, 95, or 50, or a range with the numerical values thereof obtained by combining any two of the above numerical values.

In some embodiments, optionally, the negative electrode material has a porosity of 10% - 40%.

The researches show that, the larger the porosity of the negative electrode material is, the more and more unobstructed the paths through which the gas generated during formation is diffused from the inside of the negative electrode material to the interface between the negative electrode and the separator. However, when the porosity of the negative electrode material is more than 50%, the volumetric energy density of the lithium ion battery tends to be decreased. When the porosity of the negative electrode material is below 10%, the resistance to the intercalation/de-intercalation of lithium ions of the negative electrode material is relatively large, such that the internal resistance of the battery tends to be increased. When the porosity of the negative electrode material is defined in 10% - 40%, not only the gas generated inside of the negative electrode material can diffuse out quickly but also the battery is ensured to have a high volumetric energy density and a low internal resistance.

Optionally, the porosity of the negative electrode material may be 10%, 15%, or 35%, or a range with the numerical values thereof obtained by combining any two of the above numerical values.

In the lithium ion battery of the present application, the negative electrode current collector can be a metal foil or a composite current collector. For example, as a metal foil, a copper foil can be used. The composite current collector may comprise a polymer material substrate and a metal layer formed on at least one surface of the polymer material substrate. The composite current collector can be formed by forming a metal material (copper, copper alloys, nickel, nickel alloys, titanium, titanium alloys, silver and silver alloys, etc.) on a polymer material substrate (a substrate such as polypropylene (PP), polyethylene terephthalate (PET), polybutylene terephthalate (PBT), 1,3-propane sultone (PS), polyethylene (PE), etc.).

In the lithium ion battery of the application, the negative electrode material generally comprises a negative electrode active material and an optional binder, an optional conductive agent and other optional auxiliaries, and is generally formed by coating a negative electrode slurry and drying same. The negative electrode slurry is generally formed by dispersing a negative electrode active material, and an optional conductive agent and a binder etc., into a solvent and uniformly stirring same. The solvent can be N-methylpyrrolidone (NMP) or deionized water.

An an example, the conductive agent may be selected from more than one of superconductive carbon, acetylene black, carbon black, ketjenblack, carbon dots, carbon nanotubes, graphene, and carbon nanofibers.

As an example, the binder may be selected from more than one of a butadiene styrene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

Other optional auxiliaries are for example a thickening agent (e.g. sodium carboxymethyl cellulose (CMC-Na)), etc.

[Positive electrode plate]

The positive electrode plate comprises a positive electrode current collector and a positive electrode material provided on at least one surface of the positive electrode current collector.

As an example, the positive electrode current collector has two opposite surfaces in its own thickness direction, and the positive electrode material is provided on either or both of the two opposite surfaces of the positive electrode current collector.

In the lithium ion battery of the present application, the positive electrode current collector can be a metal foil or a composite current collector. For example, as a metal foil, an aluminum foil can be used. The composite current collector may comprise a polymer material substrate and a metal layer formed on at least one surface of the polymer material substrate. The composite current collector can be formed by forming a metal material (aluminum, aluminum alloys, nickel, nickel alloys, titanium, titanium alloys, silver and silver alloys, etc.) on a polymer material substrate (a substrate such as polypropylene (PP), polyethylene terephthalate (PET), polybutylene terephthalate (PBT), 1,3-propane sultone (PS), polyethylene (PE), etc.), but the present application is not limited to these materials.

The positive electrode material include a positive electrode active material, and the positive electrode active material is selected from materials capable of de-intercalating and intercalating lithium ions. Specifically, the positive electrode active material is selected from one or more of lithium iron phosphate, lithium iron manganese phosphate, lithium cobalt oxides, lithium nickel oxides, lithium manganese oxides, lithium nickel manganese oxides, lithium nickel cobalt manganese oxides, lithium nickel cobalt aluminum oxides, and compounds obtained by adding other transition metals or non-transition metals into the above compounds, but the present application is not limited to these materials.

The positive electrode material further optionally comprises a conductive agent. However, the type of the conductive agent is not limited specifically, and can be selected by a person skilled in the art according to actual requirements. An an example, the conductive agent for the positive electrode material may be selected from more than one of superconductive carbon, acetylene black, carbon black, ketjenblack, carbon dots, carbon nanotubes, graphene, and carbon nanofibers.

In the present application, the positive electrode plate can be prepared according to a method known in the art. As an example, the positive electrode material of the application, a conductive agent and a binder can be dispersed into a solvent (e.g., N-methylpyrrolidone (NMP)) to form an uniform positive electrode slurry; the positive electrode slurry is coated onto a positive electrode current collector, and is then subjected to procedures such as drying and cold pressing, so as to obtain the positive electrode plate.

[Separator]

The lithium ion battery using an electrolyte and some lithium ion batteries using a solid electrolyte further comprise a separator. The separator is provided between the positive electrode plate and the negative electrode plate and functions for isolation. The type of the separator is not particularly limited in the present application, and any well known porous-structure separator with good chemical stability and mechanical stability can be selected. In some embodiments, the material of the separator can be selected from more than one of glass fibers, a non-woven, polyethylene, polypropylene and polyvinylidene fluoride. The separator may be a single-layer film and also a multi-layer composite film, and is not limited particularly. When the separator is a multi-layer composite film, the materials in the respective layers may be same or different, which is not limited particularly.

In some embodiments, an electrode assembly may be formed by a positive electrode plate, a negative electrode plate and a separator by a winding process or a laminating process.

In some embodiments, the lithium ion battery can comprise an outer package. The outer package is used to encapsulate the above electrode assembly and electrolyte.

In some embodiments, the outer package of the lithium ion battery may be a hard housing, for example, a hard plastic housing, an aluminum housing, a steel housing, etc. The outer package of the lithium ion battery may also be a soft package, for example, a bag-type soft package. The material of the soft package may be plastics, and the examples of plastics may include polypropylene (PP), polybutylene terephthalate (PBT), and polybutylene succinate (PBS), etc.

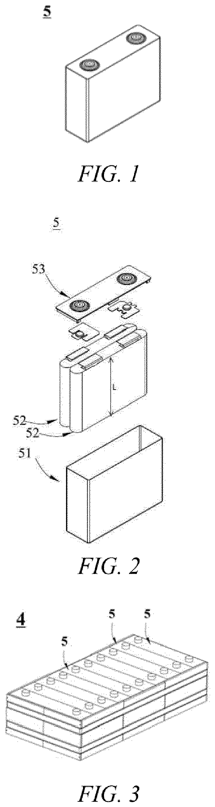

The shape of the lithium ion battery is not particularly limited in the present application, and may be a cylindrical shape, a square shape or any other shape. For example, Fig. 1 is an exemplary lithium ion battery 5 of a square structure.

In some embodiments, with reference to Fig. 2, the outer package may include a housing 51 and a cover plate 53, wherein the housing 51 can include a bottom plate and side plates connected to the bottom plate, and the bottom plate and the side plate encloses and form an accommodating cavity. The housing 51 has an opening in communication with the accommodating cavity, and the cover plate 53 can cover the opening to close the accommodating cavity. An electrode assembly 52 can be formed by a positive electrode plate, a negative electrode plate and a separator by a winding process or a laminating process. The electrode assembly 52 is encapsulated in the accommodating cavity. The electrolyte infiltrates the electrode assembly 52. The number of the electrode assembly 52 contained in the lithium ion battery 5 may be one or more, which can be selected by a person skilled in the art according to specifically actual requirements.

Moreover, a lithium ion battery, a battery module, a battery pack, a device of the present application will be illustrated with reference to the accompanying drawings as appropriate.

[Battery module]

In some embodiments, the lithium ion battery can be assembled into a battery module, the number of the lithium ion battery contained in the battery module may be one or more, and the specific number can be selected by a person skilled in the art according to the application and capacity of the battery module.

Fig. 3 is an exemplary battery module 4. With reference to Fig. 3, in the battery module 4, a plurality of lithium ion batteries 5 can be provided in sequence in the length direction of the battery module 4. Apparently, the secondary batteries can also be disposed in any other manner. Furthermore, the plurality of lithium ion batteries 5 can further be fixed with fasteners.

Optionally, the battery module 4 may further include a housing with an accommodating space and a plurality of lithium ion batteries 5 are accommodated in the accommodating space.

[Battery pack]

In some embodiments, the above battery module can also be assembled into a battery pack, and the number of the battery modules contained in the battery pack can be selected by a person skilled in the art according to the application and capacity of the battery pack.

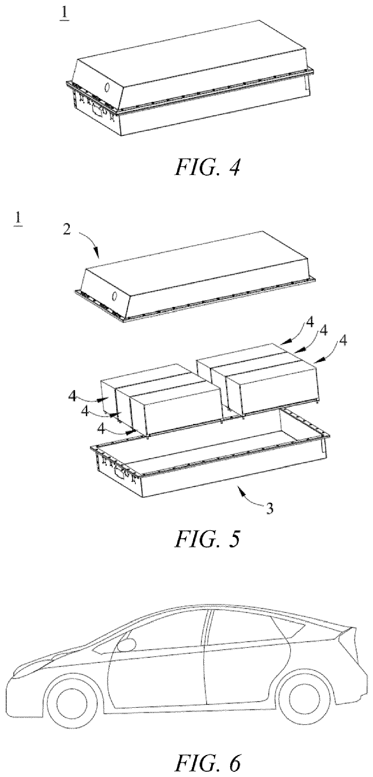

Fig. 4 and Fig. 5 show an exemplary battery pack 1. With reference to Fig. 4 and Fig. 5, the battery pack 1 may include a battery box and a plurality of battery modules 4 provided in the battery box. The battery box includes an upper box body 2 and a lower box body 3, and the upper box body 2 can cover the lower box body 3 and form a closed space for accommodating the battery modules 4. The plurality of battery modules 4 can be disposed in the battery box in any manner.

[Electrical device]

In addition, the present application also provides a power consuming device, and the power consuming device comprises more than one of a lithium ion battery, a battery modules, or a battery pack provided in the present application. The lithium ion battery, the battery module or the battery pack may be used as a power supply of the device, or as an energy storage unit of the device. The device may be, but is not limited to, a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck), an electric train, ship, and satellite, an energy storage system, and the like.

As a power consuming device, the secondary battery, battery module or battery pack can be selected according to the usage requirements thereof.

Fig. 6 shows an exemplary device. The device may be a pure electric vehicle, a hybrid electric vehicle, a plug-in hybrid electric vehicle or the like. In order to meet the requirements of the device for a high power and a high energy density of a lithium ion battery, a battery pack or a battery module can be used.

As another example, the power device may be a mobile phone, a tablet, a laptop computer, etc. This device is generally required to be thin and light, and a lithium ion battery can be used as a power supply.

**Examples**

Hereinafter, the examples of the present application will be explained. The examples described below are exemplary and are merely for explaining the present application, and should not be construed as limiting the present application. The techniques or conditions that are not specified in examples are according to the techniques or conditions described in documents in the art or the product introduction. The reagents or instruments used, if they are not marked with the manufacturer, are common products that are commercially available. The contents of the constituents in examples of the present application is based on mass, unless otherwise stated.

Example 1

[Preparation of lithium ion battery]

1) Preparation of positive electrode plate

A positive electrode active material of $LiNi_{0.8}Mn_{0.1}Co_{0.1}O_2$, a conductive agent of acetylene black, and a binder of polyvinylidene fluoride (PVDF) are dissolved at a weight ratio of 94 : 3 : 3 into a solvent of N-methylpyrrolidone (NMP), and thoroughly stirred and uniformly mixed to obtain a positive electrode slurry; the positive electrode slurry is then coated onto a positive electrode current collector, followed by drying, cold pressing and slitting to obtain a positive electrode plate.

2) Preparation of negative electrode plate

An active material of synthetic graphite, a conductive agent of acetylene black, a binder of butadiene styrene rubber (SBR) and a thickening agent of sodium carboxymethyl cellulose (CMC-Na) are dissolved at a weight ratio of 95 : 2 : 2 : 1 into a solvent of deionized water, and uniformly mixed to prepare a negative electrode slurry; the negative electrode slurry is uniformly coated onto a negative electrode current collector of copper foil once or more times, and subjected to drying, cold pressing and slitting to obtain a negative electrode plate, which has a specific surface area S of the negative electrode material of 0.1 $m^2$/g, the loading M of the negative electrode material of 11 mg/$cm^2$, and a width of the area coated with the negative electrode material of 95 mm.

3) Preparation of electrolyte

In a glove box under an argon atmosphere ($H_2O$ < 0.1 ppm, $O_2$ < 0.1 ppm), organic solvents of EC/EMC are uniformly mixed at a volume ratio of 3/7, a lithium salt of 12.5% LiPF6 is added and dissolved into the organic solvents, and lithium fluorosulfonate of 1% of the total mass of the electrolyte is then added and stirred uniformly to obtain the electrolyte in example 1. 4) Separator
A polypropylene film is used as a separator.

5) Preparation of lithium ion battery

A positive electrode plate, a separator and a negative electrode plate are stacked in sequence and then wound to obtain a bare cell, wherein the separator is positioned between the positive electrode plate and the negative electrode plate and functions for isolation; the bare cell is welded with tabs and put into an aluminum housing and baked at 80°C for water removal, and the electrolyte is subsequently injected therein, followed by sealing to obtain a uncharged battery. The uncharged battery is then successively subjected to procedures such as leaving to stand, hot and cold pressing, formation, shaping, and capacity tests to obtain a lithium ion battery product of example 1.

Examples 2-24 and examples 27-37

As to examples 2-24 and examples 27-37, the respective specific surface area S of the negative electrode material, loading M of the negative electrode material on the negative electrode current collector, width L of the area coated with the negative electrode material and content w% of fluorosulfonate and/or difluorophosphate in the electrolyte thereof are as shown in Table 1, and other process conditions are the same as those of example 1. Finally, lithium ion battery products of examples 2-24 and examples 27-37 are obtained respectively.

Example 25

Except that fluoroethylene carbonate (FEC) of 1% of the mass of the electrolyte is additionally added to the electrolyte, other parameters and processes are the same as those of example 20, so as to obtain a lithium ion battery product of example 25.

Example 26

Except that 1,3-propane sultone (PS) of 1% of the mass of the electrolyte is additionally added to the electrolyte, other parameters and processes are the same as those of example 20, so as to obtain a lithium ion battery product of example 26.

Comparative examples 1-7

As to comparative examples 1-7, the respective corresponding specific surface area S of the negative electrode material, loading M of the negative electrode material on the negative electrode current collector, width L of the area coated with the negative electrode material and the content w% of fluorosulfonate and/or difluorophosphate in the electrolyte thereof are as shown in Table 1, and other process conditions are the same as those of example 1. Finally, lithium ion battery products of comparative examples 1-7 are obtained respectively.

[Tests of related parameters of negative electrode plate]

1) Test of specific surface area S of negative electrode material

The negative electrode materials on the negative electrode plates in all examples and comparative examples are scraped off with a blade, and then tested according to standard GB/T 21650.2-2008. Reference can be made to Table 1 for specific numerical values.

2) Test of width L of area coated with negative electrode material

The width L of the area coated with the negative electrode material of all examples and comparative examples is respectively measured with a vernier caliper. Reference can be made to Table 1 for specific numerical values.

3) Test of porosity of negative electrode plate

A negative electrode plate is punched into a small round piece with a diameter of 10 cm; the thickness thereof is measured using a micrometer and the apparent volume V1 is calculated; and then the actual volume V2 is measured by a gas displacement method with reference to standard GB/T 24586-2009, with the porosity = (V1 - V2)/V1 $\times$ 100%. Reference can be made to Table 4 for specific numerical values.

[Performance test of battery]

1) Black spots and lithium precipitation on the negative electrode interface of battery being fully charged after formation.

Batteries of all examples and comparative examples are firstly left to stand at 45°C for 120 min after the formation, and vacuumized to -80 kPa, and charged at a constant current rate of 0.02 C to 3.4 V; after having been left to stand for 5 min, the batteries are charged again at a constant current rate of 0.1 C to 3.75 V, and the negative pressure was unloaded and return to normal pressure. Finally, the batteries are charged at 0.5 C to 4.2 V, and is fully charged. Subsequently, the fully charged batteries are disassembled to observe where there are black spots and lithium precipitation on the negative interface or not.

2) Test of volumetric energy density

At 25°C, the lithium ion battery is charged at a constant current rate of 1 C to 4.2 V, then charged at a constant voltage of 4.2 V until the current is less than 0.05 C, and then discharged at a rate of 0.33 C to 2.8 V to obtain the discharge energy Q. The length, width and height of the battery are measured using a vernier caliper and the volume V is calculated, with the volumetric energy density = Q/V.

3) Internal resistance test of cell

At 25°C, the lithium ion battery is charged at a constant current rate of 1 C to 4.2 V, then charged at a constant voltage of 4.2 V until the current is less than 0.05 C, and then discharged at a rate of 0.5 C for 60 min, i.e., the capacity of the cell is adjusted to 50% SOC. Then the positive and negative electrodes of the cell are connected with an AC internal resistance tester to measure the internal resistance of the cell, wherein the perturbation is 5 mV, and the frequency is 1000 hertz.

4) Battery cycling performance test of lithium ion battery at 25°C

At 25°C, a lithium ion battery is charged at a constant current rate of 1 C to 4.2 V, then charged at a constant voltage of 4.2 V until the current is less than 0.05 C, and subsequently, the lithium ion battery is discharged at a constant current rate of 1 C to 2.8 V, which is a charge/discharge cycle. By repeating such charge/discharge cycles, the capacity retention rate of the lithium ion battery after 1000 cycles is calculated.

The capacity retention rate (%) of a lithium ion battery after 1000 cycles at 25°C = (the discharge capacity of the 1000th cycle/the discharge capacity of the initial cycle) × 100%.

5) Cycling performance test of lithium ion battery at 45°C

At 45°C, a lithium ion battery is charged at a constant current rate of 1 C to 4.2 V, then charged at a constant voltage of 4.2 V until the current is less than 0.05 C, and subsequently, the lithium ion battery is discharged at a constant current rate of 1 C to 2.8 V, which is a charge/discharge cycle. By repeating such charge/discharge cycles, the capacity retention rate of the lithium ion battery after 800 cycles is calculated.

$$\text{The capacity retention rate (\%) of a lithium ion battery after 800 cycles at 25°C}$$
$$= \text{(the discharge capacity of the 800th cycle/the discharge capacity of the initial cycle)} \times$$
$$100\%.$$

The related parameters of lithium ion batteries of all preceding examples and comparative examples and performance test parameters of the batteries are respectively listed in Table 1 - Table 4.

Table 1: Related parameters of lithium ion batteries of examples and comparative examples

| No. | Specific surface area S ($m2/g$) | Loading M ($mg/cm^2$) | Width L of area coated with negative electrode material (mm) | Type of fluorosulfonate and/or difluorophosphate | Content w% of fluorosulfonate and/or difluorophosphate | Type of other additives | Content% of other additives |
|---|---|---|---|---|---|---|---|
| Example 1 | 0.1 | 11 | 95 | $FSO_3Li$ | 1 | / | / |
| Example 2 | 0.5 | 11 | 95 | $FSO_3Li$ | 1 | / | / |
| Example 3 | 3 | 11 | 95 | $FSO_3Li$ | 1 | / | / |
| Example 4 | 5 | 11 | 95 | $FSO_3Li$ | 1 | / | / |
| Example 5 | 10 | 11 | 95 | $FSO_3Li$ | 1 | / | / |
| Example 6 | 1.1 | 5 | 95 | $FSO_3Li$ | 1 | / | / |
| Example 7 | 1.1 | 11 | 95 | $FSO_3Li$ | 1 | / | / |
| Example 8 | 1.1 | 20 | 95 | $FSO_3Li$ | 1 | / | / |
| Example 9 | 1.1 | 50 | 95 | $FSO_3Li$ | 1 | / | / |
| Example 10 | 1.1 | 80 | 95 | $FSO4Li$ | 1 | / | / |
| Example 11 | 1.1 | 100 | 95 | $FSO_3Li$ | 1 | / | / |
| Example 12 | 1.1 | 11 | 200 | $FSO_3Li$ | 1 | / | / |
| Example 13 | 1.1 | 11 | 150 | $FSO_3Li$ | 1 | / | / |
| Example 14 | 1.1 | 11 | 100 | $FSO_3Li$ | 1 | / | / |
| Example 15 | 1.1 | 11 | 95 | $FSO_3Li$ | 1 | / | / |
| Example 16 | 1.1 | 11 | 50 | $FSO_3Li$ | 1 | / | / |
| Example 17 | 1.1 | 11 | 95 | $FSO_3Li$ | 0.01 | / | / |
| Example 18 | 1.1 | 11 | 95 | $FSO_3Li$ | 0.1 | / | / |
| Example 19 | 1.1 | 11 | 95 | $FSO_3Li$ | 0.5 | / | / |
| Example 20 | 1.1 | 11 | 95 | $FSO_3Li$ | 1 | / | / |
| Example 21 | 1.1 | 11 | 95 | $FSO_3Li$ | 2 | / | / |
| Example 22 | 1.1 | 11 | 95 | $FSO_3Li$ | 5 | / | / |
| Example 23 | 1.1 | 11 | 95 | $FSO_3Li$ | 10 | / | / |
| Example 24 | 1.1 | 11 | 95 | $FSO_3Li$ | 11 | / | / |

| No. | Specific surface area S (m2/g) | Loading M (mg/cm2) | Width L of area coated with negative electrode material (mm) | Type of fluorosulfonate and/or difluorophosphate | Content w% of fluorosulfonate and/or difluorophosphate | Type of other additives | Content% of other additives |
|---|---|---|---|---|---|---|---|
| Example 25 | 1.1 | 11 | 95 | $FSO_3Li$ | 1 | FEC | 1 |
| Example 26 | 1.1 | 11 | 95 | $FSO_3Li$ | 1 | PS | 1 |
| Example 27 | 1.1 | 11 | 95 | Lithium difluorophosphate | 1 | / | / |
| Example 28 | 1.1 | 11 | 95 | Ferrous difluorophosphate | 1 | / | / |
| Example 29 | 1.1 | 11 | 95 | Nickel difluorophosphate | 1 | / | / |
| Example 30 | 1.1 | 11 | 95 | $FSO_3Na$ | 1 | / | / |
| Example 31 | 1.1 | 11 | 95 | $FSO_3K$ | 1 | / | / |
| Example 32 | 1.1 | 11 | 95 | $FSO_3Cs$ | 1 | / | / |
| Example 33 | 1.1 | 11 | 95 | $FSO_3Li$ | 0.5 | / | / |
| Example 34 | 1.1 | 11 | 95 | $FSO_3Li$ | 0.5 | / | / |
| Example 35 | 1.1 | 11 | 95 | $FSO_3Li$ | 0.5 | / | / |
| Example 36 | 1.1 | 11 | 95 | $FSO_3Li$ | 0.5 | / | / |
| Example 37 | 1.1 | 11 | 95 | $FSO_3Li$ | 0.5 | / | / |
| Comparative example 1 | 0.2 | 5 | 95 | / | 0 | / | / |
| Comparative example 2 | 1.1 | 11 | 95 | / | 0 | / | / |
| Comparative example 3 | 1.1 | 11 | 50 | / | 0 | / | / |
| Comparative example 4 | 1.1 | 11 | 95 | / | 0 | VC | 1 |
| Comparative example 5 | 1.1 | 11 | 95 | $FSO_3Li$ | 15 | / | / |
| Comparative example 6 | 1.1 | 5 | 40 | $FSO_3Li$ | 5 | / | / |

| No. | Specific surface area S (m2/g) | Loading M (mg/cm$^2$) | Width L of area coated with negative electrode material (mm) | Type of fluorosulfonate and/or difluorophosphate | Content w% of fluorosulfonate and/or difluorophosphate | Type of other additives | Content% of other additives |
|---|---|---|---|---|---|---|---|
| Comparative example 7 | 1.1 | 0.95 | 95 | FSO$_3$Li | 1 | / | / |

Table 2: Table of related parameters and performance tests of lithium ion batteries from examples and comparative examples

| No. | α | β | w × β/α | Interface when being fully charged after formation | Volumetric energy density/WhL$^{-1}$ | Internal resistance of cell/mΩ |
|---|---|---|---|---|---|---|
| Example 1 | 0.055 | 1.05 | 19.14 | No black spot, no lithium precipitation | 575 | 0.388 |
| Example 2 | 0.275 | 1.05 | 3.83 | No black spot, no lithium precipitation | 570 | 0.366 |
| Example 3 | 1.65 | 1.05 | 0.64 | No black spot, no lithium precipitation | 569 | 0.349 |
| Example 4 | 2.75 | 1.05 | 0.38 | No black spot, no lithium precipitation | 562 | 0.342 |
| Example 5 | 5.5 | 1.05 | 0.19 | Few black spots | 550 | 0.335 |
| Example 6 | 0.275 | 1.05 | 3.83 | No black spot, no lithium precipitation | 550 | 0.214 |
| Example 7 | 0.605 | 1.05 | 1.74 | No black spot, no lithium precipitation | 570 | 0.356 |
| Example 8 | 1.1 | 1.05 | 0.96 | No black spot, no lithium precipitation | 575 | 0.361 |
| Example 9 | 2.75 | 1.05 | 0.38 | No black spot, no lithium precipitation | 578 | 0.374 |
| Example 10 | 4.4 | 1.05 | 0.24 | Few black spots | 579 | 0.396 |
| Example 11 | 5.5 | 1.05 | 0.19 | Few black spots | 576 | 0.411 |
| Example 12 | 0.605 | 0.50 | 0.83 | Few black spots | 574 | 0.366 |
| Example 13 | 0.605 | 0.67 | 1.10 | Few black spots | 572 | 0.36 |
| Example 14 | 0.605 | 1.00 | 1.65 | No black spot, no lithium precipitation | 571 | 0.356 |
| Example 15 | 0.605 | 1.05 | 1.74 | No black spot, no lithium precipitation | 570 | 0.356 |
| Example 16 | 0.605 | 2.00 | 3.31 | No black spot, no lithium precipitation | 565 | 0.352 |
| Example 17 | 0.605 | 1.05 | 0.02 | More black spots | 565 | 0.375 |
| Example 18 | 0.605 | 1.05 | 0.17 | Few black spots | 568 | 0.359 |
| Example 19 | 0.605 | 1.05 | 0.87 | No black spot, no lithium precipitation | 571 | 0.351 |
| Example 20 | 0.605 | 1.05 | 1.74 | No black spot, no lithium precipitation | 570 | 0.356 |
| Example 21 | 0.605 | 1.05 | 3.48 | No black spot, no lithium precipitation | 571 | 0.359 |
| Example 22 | 0.605 | 1.05 | 8.70 | No black spot, no lithium precipitation | 572 | 0.365 |
| Example 23 | 0.605 | 1.05 | 17.40 | No black spot, no lithium precipitation | 575 | 0.369 |

(continued)

| No. | α | β | w × β/α | Interface when being fully charged after formation | Volumetric energy density/WhL$^{-1}$ | Internal resistance of cell/mQ |
|---|---|---|---|---|---|---|
| Example 24 | 0.605 | 1.05 | 19.14 | No black spot, no lithium precipitation | 569 | 0.375 |
| Example 25 | 0.605 | 1.05 | 1.74 | No black spot, no lithium precipitation | 570 | 0.341 |
| Example 26 | 0.605 | 1.05 | 1.74 | No black spot, no lithium precipitation | 570 | 0.362 |
| Example 27 | 0.605 | 1.05 | 1.74 | No black spot, no lithium precipitation | 570 | 0.351 |
| Example 28 | 0.605 | 1.05 | 1.74 | No black spot, no lithium precipitation | 570 | 0.349 |
| Example 29 | 0.605 | 1.05 | 1.74 | No black spot, no lithium precipitation | 570 | 0.353 |
| Example 30 | 0.605 | 1.05 | 1.74 | No black spot, no lithium precipitation | 570 | 0.357 |
| Example 31 | 0.605 | 1.05 | 1.74 | No black spot, no lithium precipitation | 570 | 0.355 |
| Example 32 | 0.605 | 1.05 | 1.74 | No black spot, no lithium precipitation | 570 | 0.356 |
| Example 33 | 0.605 | 1.05 | 0.870 | No black spot, no lithium precipitation | 571 | 0.351 |
| Example 34 | 0.605 | 1.05 | 0.870 | No black spot, no lithium precipitation | 576 | 0.453 |
| Example 35 | 0.605 | 1.05 | 0.870 | No black spot, no lithium precipitation | 573 | 0.406 |
| Example 36 | 0.605 | 1.05 | 0.870 | No black spot, no lithium precipitation | 568 | 0.336 |
| Example 37 | 0.605 | 1.05 | 0.870 | No black spot, no lithium precipitation | 555 | 0.302 |
| Comparative example 1 | 0.05 | 1.05 | 0.00 | A large number of black spots | 510 | 0.385 |
| Comparative example 2 | 0.605 | 1.05 | 0.00 | A large number of black spots and local lithium precipitation | 560 | 0.384 |
| Comparative example 3 | 0.605 | 2 | 0.00 | No black spot, no lithium precipitation | 530 | 0.357 |
| Comparative example 4 | 0.605 | 1.05 | 0.00 | A large number of black spots | 565 | 0.553 |
| Comparative example 5 | 0.605 | 1.05 | 26.10 | No black spot, no lithium precipitation | 568 | 0.658 |
| Comparative example 6 | 0.275 | 2.5 | 45.45 | No black spot, no lithium precipitation | 500 | 0.358 |
| Comparative example 7 | 0.0523 | 1.05 | 20.15 | No black spot, no lithium precipitation | 350 | 0.103 |

Table 3: Table of related parameters and performance tests of lithium ion batteries from examples and comparative examples

| No. | Content % of fluorosulfonate | Type of other additives | Content w% of other additives | α | β | w × β/α | Interface when being fully charged after formation | Volumetric energy density /WhL⁻¹ | Internal resistance of cell mΩ | Capacity retention rate after 1000 cycles at 25°C | Capacity retention rate after 800 cycles at 45°C |
|---|---|---|---|---|---|---|---|---|---|---|---|
| Example 17 | 0.01 | / | / | 0.605 | 1.05 | 0.02 | More black spots | 565 | 0.375 | 76% | 70% |
| Example 18 | 0.1 | / | / | 0.605 | 1.05 | 0.17 | Few black spots | 568 | 0.359 | 78% | 74% |
| Example 19 | 0.5 | / | / | 0.605 | 1.05 | 0.87 | No black spot, no lithium precipitation | 571 | 0.351 | 80% | 74% |
| Example 20 | 1 | / | / | 0.605 | 1.05 | 1.74 | No black spot, no lithium precipitation | 570 | 0.356 | 81% | 75% |
| Example 21 | 2 | / | / | 0.605 | 1.05 | 3.48 | No black spot, no lithium precipitation | 571 | 0.359 | 82% | 75% |
| Example 22 | 5 | / | / | 0.605 | 1.05 | 8.70 | No black spot, no lithium precipitation | 572 | 0.365 | 80% | 76% |
| Example 23 | 10 | / | / | 0.605 | 1.05 | 17.40 | No black spot, no lithium precipitation | 575 | 0.369 | 74% | 69% |
| Example 24 | 11 | / | / | 0.605 | 1.05 | 19.14 | No black spot, no lithium precipitation | 569 | 0.375 | 73% | 67% |
| Example 25 | 1 | FEC | 1 | 0.605 | 1.05 | 1.74 | No black spot, no lithium precipitation | 570 | 0.341 | 85% | 79% |
| Example 26 | 1 | PS | 1 | 0.605 | 1.05 | 1.74 | No black spot, no lithium precipitation | 570 | 0.362 | 84% | 80% |

Table 4: Table of related parameters and performance tests of lithium ion batteries from examples and comparative examples

| No. | Porosity of negative electrode material/% | $\alpha$ | $\beta$ | $w \times \beta/\alpha$ | Interface when being fully charged after formation | Volumetric energy density/WhL$^{-1}$ | Internal resistance of cell m$\Omega$ |
|---|---|---|---|---|---|---|---|
| Example 33 | 0.01 | 0.605 | 1.05 | 0.870 | No black spot, no lithium precipitation | 565 | 0.375 |
| Example 34 | 0.1 | 0.605 | 1.05 | 0.870 | No black spot, no lithium precipitation | 568 | 0.359 |
| Example 35 | 0.5 | 0.605 | 1.05 | 0.870 | No black spot, no lithium precipitation | 571 | 0.351 |
| Example 36 | 1 | 0.605 | 1.05 | 0.870 | No black spot, no lithium precipitation | 570 | 0.356 |
| Example 37 | 2 | 0.605 | 1.05 | 0.870 | No black spot, no lithium precipitation | 571 | 0.359 |
| Note: In the above examples, the specific surface area S is 1.1 m2/g, the loading M is 11 mg/cm$^2$, the width L of the area coated with the negative electrode material is 95 mm, and the fluorosulfonate is $FSO_3Li$ with a content of 0.5% | | | | | | | |

[Effects of various design parameters on the energy density, gas generation during formation and the internal resistance of the lithium ion battery]

According to Table 1 and Table 2, it can be seen that for lithium ion batteries of examples 1-37, under the combined effects of various design parameters, the lithium ion batteries designed and developed meet the relationship formula of $0.01 \leq w \times \beta/\alpha \leq 20$, and correspondingly, the lithium ion batteries have following advantages at the same time: maintaining a high energy density ( lithium ion batteries from examples 1-37 all have a volumetric energy density of 550 WhL$^{-1}$ or more), significant improvement in term of the problem of gas generation during formation (the phenomena of a large number of black spots and lithium precipitation are not occurred in lithium ion batteries from examples 1-37), and a low internal resistance of a lithium ion battery (the lithium ion batteries from examples 1-37 all have an internal resistance of 0.46 mQ or less, mostly in the range of 0.30 - 0.37 m$\Omega$).

However, compared with those in examples 1-37, the various design parameters of the lithium ion batteries from comparative examples 1-7 do not meet the relationship formula of $0.01 \leq w \times \beta/\alpha \leq 20$, and thus the corresponding results from the lithium ion batteries of comparative examples 1-7 are poorer. Specifically, for comparative example 1, the volumetric energy density is very low (510 WhL$^{-1}$ only) and a large number of black spots occurs at the same time, which indicates that lots of gases are generated during formation and the problem of gas generation during formation of the lithium ion battery is not mitigated. For comparative example 2, although the lithium ion battery has a moderate volumetric energy density, a large number of black spots and lithium precipitation occur, which indicates that the problem of gas generation during formation of the lithium ion battery is not mitigated. For the lithium ion battery of comparative example 3, although the phenomenon of black spots does not occurs, the volumetric energy density is very low (530 WhL$^{-1}$ only). For the lithium ion battery of comparative example 4, the phenomenon of a large number of black spots occurs and the internal resistance of the battery is very high (0.553 m$\Omega$). For the lithium ion battery of comparative example 5, although the phenomenon of black spots does not occur, the internal resistance of the battery is very high (0.658 m$\Omega$). For the lithium ion batteries of comparative example 6 and comparative example 7, although the phenomenon of black spots does not occur, the volumetric energy density is very low (respectively 500 WhL$^{-1}$ and 350 WhL$^{-1}$ only).

[Effect of content w% of fluorosulfonate and/or difluorophosphate on lithium ion battery]

From Table 1, Table 2 and Table 3 in combination, it can be seen that in examples 17-24, when w% is in the range of 0.01% - 11%, no large number of dark spots occurs, and the energy density and resistance of the batteries are also maintained at a superior level. However, compared with those of examples 17-24, due to the lack of a fluorosulfonate and/or difluorophosphate substance, the phenomena of a large number of black spots and lithium precipitation occur in the lithium ion battery of comparative example 2, which indicates that the gas generation during formation of the battery is severe. In comparative example 5, when the value of w% is relatively large (15%), although the energy density of the battery is not affected substantially, the internal resistance of the battery is relatively high.

According to Table 3, in examples 19-23, when w% is in the range of 0.5% - 10%, the lithium ion batteries have a high energy density, no black spot, a significantly improvement in term of the problem of gas generation during formation and also low internal resistance of the batteries. Further, in examples 19-22, when w% is in the range of 0.5% - 5%, the corresponding lithium ion batteries also have both good high and low temperature cycling performance.

[Effect of loading M of negative electrode material per unit area of negative electrode current collector on lithium ion battery]

According to Table 1 and Table 2, by a comprehensive comparison of examples 6-11, for examples 7-10, when M is in the range of 11 mg/cm$^2$ - 80 mg/cm$^2$, all batteries have an energy density at a higher level (570 - 579 WhL$^{-1}$) and also an internal resistance of less than 0.4 mΩ. However, for example 6, when M is lower (5 mg/cm$^2$), the lithium ion battery has a lower energy density (550 WhL$^{-1}$); for example 11, when M is higher (100 mg/cm$^2$), the lithium ion battery has a lower energy density (550 WhL$^{-1}$) and also correspondingly a higher internal resistance of the lithium ion battery (0.411 mΩ). Further, when the value of M is in the range of 11 mg/cm$^2$ - 50 mg/cm$^2$, the lithium ion batteries have no black spot, a significant improvement in term of the problem of gas generation during formation, an energy density maintained at a higher level and a lower internal resistance.

[Effect of specific surface area S of negative electrode material on lithium ion battery]

According to Table 1 and Table 2, by a comprehensive comparison of examples 1-5, for examples 2-4 with S in the range of 0.5 m$^2$/g - 5 m$^2$/g, the lithium ion batteries have a higher energy density no black spot occurred on the negative electrode, and a significant improvement in term of the problem of gas generation during formation. However, for example 1, the value of S is smaller (0.1 m$^2$/g), which results in a higher internal resistance of the battery; for example 5, the value of S is larger (10 m$^2$/g), which lead to an increase in the contact area of the negative electrode material and the electrolyte, such that the phenomenon of black spots on the positive electrode occurs.

[Effect of width L of area coated with negative electrode material on lithium ion battery]

According to Table 1 and Table 2, by a comprehensive comparison of examples 12-16 and comparative example 6, compared with that of comparative example 6, the L of examples 12-16 is in the range of 50 mm ≤ L ≤ 200 mm, the corresponding lithium ion batteries have a higher energy density and a lower internal resistance. For examples 14-16, as L is in the range of 50 mm ≤ L ≤ 100 mm, the corresponding lithium ion batteries have not only a higher energy density level and a lower internal resistance but also no black spot occurred on the negative electrode, and a significant improvement in term of the problem of gas generation during formation.

[Effect of additives of fluoroethylene carbonate and 1,3-propane sultone on cycling performance of lithium ion battery]

According to Table 3, by comparing examples 25, 26 and 20, to the electrolyte comprising a fluorosulfonate and/or difluorophosphate, fluoroethylene carbonate or 1,3-propane sultone is additionally added, the high and low temperature cycling performance of the lithium ion batteries can be effectively improved.

[Effect of porosity of negative electrode material on lithium ion battery]

According to Table 4, by a comprehensive comparison of examples 33-37, the porosity in examples 33, 35 and 36 is in the range of 10% - 40%, and therefore, the corresponding lithium ion batteries have an internal resistance (less than 0.41 mQ) and a higher energy density (about 570 WhL$^{-1}$) maintained at a good level. However, the porosity of the negative electrode material in example 34 is lower and thus the internal resistance of the battery is higher, and the porosity of the negative electrode material of example 37 is larger and thus the volumetric energy density of the lithium ion battery is lower.

It should be noted that the present application is not limited to the above embodiments. The above embodiments are exemplary only, and any embodiment that has substantially same constitutions as the technical ideas and has the same effects within the scope of the technical solution of the present application falls within the technical scope of the present application. In addition, without departing from the gist of the present application, various modifications that can be conceived by those skilled in the art to the embodiments, and other modes constructed by combining some of the constituent elements of the embodiments also full within the scope of the present application.

**Claims**

1. A lithium ion battery, comprising:

   an electrode assembly, wherein the electrode assembly comprises a negative electrode current collector and a negative electrode material provided on at least one surface of the negative electrode current collector; and an electrolyte, comprising a fluorosulfonate and/or difluorophosphate substance;

   wherein the lithium ion battery has a gas generation area coefficient during formation defined as $\alpha$, with $\alpha = M \times S/200$, equation (I),

   in the equation (I), M is the loading of the negative electrode material per unit area of the negative electrode current collector, in $mg/cm^2$, and M is in the range of 5 $mg/cm^2$ - 100 $mg/cm^2$,

   in the equation (I), S is the specific surface area of the negative electrode material on the negative electrode current collector, in $m^2/g$, and S is in the range of 0.1 $m^2/g$ - 10 $m^2/g$,

   and the lithium ion battery has a gas venting path coefficient defined as $\beta$, with $\beta = 100/L$, equation (II),

   in the equation (II), L is the width of the area coated with the negative electrode material on the surface of the negative electrode current collector, in mm, and L is in the range of L $\geq$ 50 mm,

   wherein the mass percentage content w% of the fluorosulfonate and/or difluorophosphate substance in the electrolyte, the gas generation area coefficient during formation $\alpha$ of the lithium ion battery, and the gas venting path coefficient $\beta$ of the lithium ion battery satisfy $0.01 \leq w \times \beta/\alpha \leq 20$, formula (III).

2. The lithium ion battery according to claim 1, wherein
   the fluorosulfonate has a structural formula of $(FSO_3)_y M^{y+}$, wherein $M^{y+}$ is selected from one of $Li^+$, $Na^+$, $K^+$, $Rb^+$, $Cs^+$, $Mg^{2+}$, $Ca^{2+}$, $Ba^{2+}$, $Al^{3+}$, $Fe^{2+}$, $Fe^{3+}$, $Ni^{2+}$ and $Ni^{3+}$.

3. The lithium ion battery according to claim 1, wherein
   the difluorophosphate has a structural formula of $(F_2PO_2)_y M^{y+}$, wherein $M^{y+}$ is selected from one of $Li^+$, $Na^+$, $K^+$, $Rb^+$, $Cs^+$, $Mg^{2+}$, $Ca^{2+}$, $Ba^{2+}$, $Al^{3+}$, $Fe^{2+}$, $Fe^{3+}$, $Ni^{2+}$ and $Ni^{3+}$.

4. The lithium ion battery according to any one of claims 1-3, wherein
   the mass percentage content w% of the fluorosulfonate and/or difluorophosphate substance in the electrolyte is in the range of 0.01% - 11%, optionally 0.5% - 10%, and further optionally 0.5% - 5%.

5. The lithium ion battery according to any one of claims 1-4, wherein
   the loading M of the negative electrode material per unit area of the negative electrode current collector is in the range of 11 $mg/cm^2$ - 80 $mg/cm^2$, optionally 11 $mg/cm^2$ - 50 $mg/cm^2$.

6. The lithium ion battery according to any one of claims 1-5, wherein
   the specific surface area S of the negative electrode material on the negative electrode current collector is in the range of 0.5 $m^2/g$ - 5$m^2/g$.

7. The lithium ion battery according to any one of claims 1-6, wherein
   the width L of the area coated with the negative electrode material on the negative electrode current collector is in the range of 50 mm $\leq$ L $\leq$ 200 mm, optionally 50 mm $\leq$ L $\leq$ 100 mm.

8. The lithium ion battery according to any one of claims 1-7, wherein
   the electrolyte comprises fluoroethylene carbonate and/or 1,3-propane sultone.

9. The lithium ion battery according to any one of claims 1-8, wherein
   the negative electrode material has a porosity of 10% - 40%.

10. A battery module,
    comprising a lithium ion battery according to any one of claims 1-9.

11. A battery pack,
    comprising a lithium ion battery according to any one of claims 1-9 or a battery module according to claim 10.

12. A power consuming device,
    comprising at least one of a lithium ion battery according to any one of claim 1-9, a battery module according to claim 10 or a battery pack according to claim 11.

5

FIG. 1

5

53

52
52

51

FIG. 2

4

5

5

5

FIG. 3

FIG. 4

FIG. 5

FIG. 6

## INTERNATIONAL SEARCH REPORT

| International application No. |
| --- |
| **PCT/CN2022/073161** |

**A. CLASSIFICATION OF SUBJECT MATTER**

H01M 10/0525(2010.01)i; H01M 10/0567(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; WPABSC; VEN; ENTXT; ENTXTC; CNKI: 负极, 阳极, 涂覆, 涂布, 重量, 比表面积, BET, 集流体, 宽度, 电解液, 氟磺酸盐, 二氟磺酸盐, negative electrode, anode, coat, weight, specific surface area, current collector, width, electrolyte, fluorosulfonate, difluorosulfonate

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2014167890 A (TOSHIBA CORP.) 11 September 2014 (2014-09-11) description paragraphs 2, 13-152, figures 1-7 | 1-12 |
| Y | CN 112234252 A (SHANSHAN ADVANCED MATERIALS (QUZHOU) CO., LTD.) 15 January 2021 (2021-01-15) description, paragraphs 5-33 | 1-12 |
| Y | CN 110556566 A (TOYOTA JIDOSHA KABUSHIKI KAISHA) 10 December 2019 (2019-12-10) description paragraphs 48-120 | 1-12 |
| Y | CN 110352527 A (ASAHI KASEI CORPORATION) 18 October 2019 (2019-10-18) description paragraphs 11-203, 349-364, 475-554 | 1-12 |
| Y | CN 103636037 A (NISSAN MOTOR CO., LTD.) 12 March 2014 (2014-03-12) description paragraphs 60-115 | 1-12 |
| A | JP 2012216521 A (MITSUBISHI CHEMICAL CORPORATION) 08 November 2012 (2012-11-08) entire document | 1-12 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 March 2022** | **28 March 2022** |

| Name and mailing address of the ISA/CN | Authorized officer |
| --- | --- |
| **China National Intellectual Property Administration (ISA/CN)** No. 6, Xitucheng Road, Jimenqiao, Haidian District, Beijing 100088, China | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/073161**

| Patent document cited in search report | | | Publication date (day/month/year) | Patent family member(s) | | | Publication date (day/month/year) |
|---|---|---|---|---|---|---|---|
| JP | 2014167890 | A | 11 September 2014 | JP | 6162431 | B2 | 12 July 2017 |
| CN | 112234252 | A | 15 January 2021 | None | | | |
| CN | 110556566 | A | 10 December 2019 | RU | 2705569 | C1 | 08 November 2019 |
| | | | | US | 2019372176 | A1 | 05 December 2019 |
| | | | | KR | 20190137704 | A | 11 December 2019 |
| | | | | KR | 102217936 | B1 | 19 February 2021 |
| | | | | JP | 2019212419 | A | 12 December 2019 |
| | | | | BR | 102019011126 | A2 | 17 December 2019 |
| | | | | EP | 3576189 | A1 | 04 December 2019 |
| | | | | IN | 201914021554 | A | 06 December 2019 |
| CN | 110352527 | A | 18 October 2019 | EP | 3719879 | A2 | 07 October 2020 |
| | | | | US | 2020274198 | A1 | 27 August 2020 |
| | | | | JP | WO2018169029 | A1 | 19 December 2019 |
| | | | | US | 2020091554 | A1 | 19 March 2020 |
| | | | | US | 11081730 | B2 | 03 August 2021 |
| | | | | EP | 3930043 | A1 | 29 December 2021 |
| | | | | KR | 20190105096 | A | 11 September 2019 |
| | | | | WO | 2018169029 | A1 | 20 September 2018 |
| | | | | TW | 201929308 | A | 16 July 2019 |
| | | | | TW | I666805 | B | 21 July 2019 |
| | | | | TW | 201924130 | A | 16 June 2019 |
| | | | | TW | I666806 | B | 21 July 2019 |
| | | | | TW | 201841425 | A | 16 November 2018 |
| | | | | TW | I663763 | B | 21 June 2019 |
| | | | | EP | 3598557 | A1 | 22 January 2020 |
| CN | 103636037 | A | 12 March 2014 | WO | 2013005737 | A1 | 10 January 2013 |
| | | | | KR | 20140025597 | A | 04 March 2014 |
| | | | | KR | 101606153 | B1 | 24 March 2016 |
| | | | | MX | 2013015399 | A | 31 March 2014 |
| | | | | US | 2014131633 | A1 | 15 May 2014 |
| | | | | US | 9496065 | B2 | 15 November 2016 |
| | | | | TW | 201308734 | A | 16 February 2013 |
| | | | | TW | I452760 | B | 11 September 2014 |
| | | | | EP | 2731180 | A1 | 14 May 2014 |
| | | | | EP | 2731180 | B1 | 24 November 2021 |
| | | | | RU | 2556239 | C1 | 10 July 2015 |
| | | | | CN | 103636037 | B | 20 January 2016 |
| | | | | BR | 112013033558 | A2 | 19 December 2017 |
| | | | | JP | 2013214489 | A | 17 October 2013 |
| | | | | JP | 5970978 | B2 | 17 August 2016 |
| | | | | IN | 201400241 | P2 | 11 April 2014 |
| | | | | ID | 201504551 | A | 16 October 2015 |
| JP | 2012216521 | A | 08 November 2012 | None | | | |

Form PCT/ISA/210 (patent family annex) (January 2015)